# EUROPEAN PATENT APPLICATION

(11) **EP 4 576 518 A1**
(43) Date of publication of application: **25.06.2025**
(21) Application number: 23885431.9
(22) Date of filing: 04.10.2023
(51) Int. Cl.: H02K 9/19

(54) **MOTOR COOLING STRUCTURE**

(30) Priority: 31.10.2022 JP 2022174358
(71) Applicant: AISIN CORPORATION, Kariya-shi, Aichi 448-8650 (JP)
(72) Inventor: TAKI Yasuhiro, Kariya-shi, Aichi 448-8650 (JP)
(74) Representative: Kramer Barske Schmidtchen Patentanwälte PartG mbB
(86) International application number: PCT/JP2023/036158
(87) International publication number: WO 2024/095668

(57) **Abstract**

[Problem] To increase a possibility of causing a cooling medium to land at respective proper positions for two coil end parts having different shapes and sizes.

[Solution] There is provided a motor cooling structure configured to cool a motor including a stator core on which a plurality of coils are wound, the motor including two coil end parts protruding from both end portions in an axial direction of the stator core, the motor cooling structure including: a first cooling medium pipe configured to supply a cooling medium to one of the two coil end parts; and a second cooling medium pipe configured to supply a cooling medium to another one of the two coil end parts, in which the first cooling medium pipe includes a first cooling medium supply portion overlapping a corresponding one of the coil end parts along the axial direction, the second cooling medium pipe includes a second cooling medium supply portion overlapping a corresponding one of the coil end parts along the axial direction, the first cooling medium supply portion and the second cooling medium supply portion are formed with respective discharge holes each configured to discharge a cooling medium to a corresponding one of the coil end parts, and respective positions of the first cooling medium supply portion and the second cooling medium supply portion in a gravity direction are different from each other.

## Description

### TECHNICAL FIELD

The present invention relates to a motor cooling structure.

### BACKGROUND ART

Conventionally, there is known a technique for supplying a cooling medium from above a motor to a coil end part and performing cooling. Patent Literature 1 discloses a cooling device in which discharge holes for a cooling medium are provided on respective upstream sides offset from the respective centers of coil end parts by a distance a. In this cooling device, when the flow rate of the cooling medium is small, the cooling medium is discharged directly below, that is, to the upstream side offset from the center of each coil end part by the distance a, and when the flow rate of the cooling medium is maximum, the cooling medium is discharged to the center of each coil end part. Moreover, in the cooling device, oil coverage rate in the coil end part can be maximized when the flow rate of the cooling medium is maximum, and as a result, the maximum cooling effect can be obtained when coolness is most required.

### CITATION LIST

### PATENT LITERATURE

Patent Literature 1: JP 2006-115652 A

### SUMMARY OF INVENTION

### TECHNICAL PROBLEMS

However, at both ends in an axial direction of a stator core, coil shapes in the two coil end parts provided in annular shapes are different, and the sizes of the coil end parts are different. That is, the coils are curved in one of the coil end parts, and the coils are welded in the other one of the coil end parts. In the coil end part where the coils are welded, because of welding, an interval between the coils is larger than the interval between the coils in the coil end part where the coils are curved. Thus, regarding the sizes of the coil end parts in a radial direction, the coil end part where the coils are welded is larger than the coil end part where the coils are curved. Therefore, in a case where the cooling medium is discharged from the same height discharge holes to the two coil end parts, there is a possibility that a covered state with the cooling medium in any one of the coil end parts becomes insufficient compared with the other one, and that thus cooling performance decreases.

The present invention has been made in view of the above problems, and the present invention secures a range covered with a cooling medium and enhances coolness by causing the cooling medium to land at each of respective proper positions for two coil end parts having different shapes and sizes.

### SOLUTION TO PROBLEMS

In order to achieve the above, there is provided a motor cooling structure configured to cool a motor including a stator core on which a plurality of coils are wound, the motor including two coil end parts protruding from both end portions in an axial direction of the stator core, the motor cooling structure including: a first cooling medium pipe configured to supply a cooling medium to one of the two coil end parts; and a second cooling medium pipe configured to supply a cooling medium to another one of the two coil end parts, in which the first cooling medium pipe includes a first cooling medium supply portion overlapping a corresponding one of the coil end parts along the axial direction, the second cooling medium pipe includes a second cooling medium supply portion overlapping a corresponding one of the coil end parts along the axial direction, the first cooling medium supply portion and the second cooling medium supply portion are formed with respective discharge holes each configured to discharge a cooling medium to a corresponding one of the coil end parts, and respective positions of the first cooling medium supply portion and the second cooling medium supply portion in a gravity direction are different from each other.

As described above, in the motor cooling medium structure, the positions of the two cooling medium distribution and supply portions in the gravity direction are different from each other. Thus, flexibility is increased in positional adjustment of each cooling medium pipe, and the cooling medium is caused to land at each of respective proper positions for the coil end parts, which are the two coil end parts having different shapes and sizes, whereby a range covered with the cooling medium can be secured and coolness can be enhanced.

### BRIEF DESCRIPTION OF DRAWINGS

FIG. 1 is a side view of a motor and a motor cooling device.
FIG. 2 is an enlarged view of a region P.
FIG. 3 is a view of the region P as viewed from behind toward front of the paper surface of FIG. 1.
FIG. 4 is a view of the region P as viewed in a first axial direction A1.
FIG. 5 is a cross-sectional view taken along line B-B.
FIG. 6 is an enlarged view of a region Q.
FIG. 7 is a view of the region Q as viewed from behind toward front of the paper surface of FIG. 1.
FIG. 8 is a diagram showing a trajectory of a cooling medium.

### DESCRIPTION OF EMBODIMENT

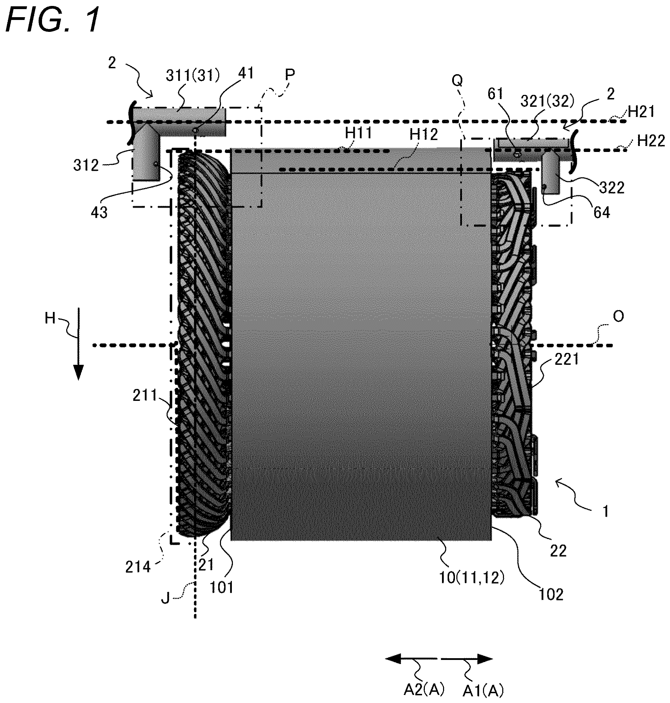

FIG. 1 is a side view showing a motor 1 and a motor cooling device 2 according to the present embodiment. The motor cooling device 2 includes a rotor (not shown), a stator 10, a welding-side coil end part 21, and a counter-welding-side coil end part 22. The motor cooling device 2 includes a motor cooling structure. In FIG. 1, an axial direction A is a direction parallel to a rotation axis (central axis) O of the stator 10. When two directions in the axial direction A are distinguished, one of the two directions is referred to as a first axial direction, and the other one of the two directions is referred to as a second axial direction. In the present embodiment, the right direction in the paper surface of FIG. 1, that is, the counter-welding-side coil end part side is referred to as a first axial direction A1, and the left direction in the paper surface of FIG. 1, that is, the welding-side coil end part side is referred to as a second axial direction A2. In addition, a circumferential direction about the central axis O of the stator 10 is referred to as a circumferential direction R. A radial direction about the central axis O of the stator 10 is referred to as a radial direction. A gravity direction H is a gravity direction in a state where the motor 1 is mounted in a vehicle. In addition, a direction opposite to the gravity direction H is referred to as a height direction.

The stator 10 is formed in an annular shape, and is installed such that the axial direction A thereof is orthogonal to the gravity direction H. The stator 10 includes a stator core 11 and coils 12 wound on the stator core 11. On the stator core 11, a plurality of slots (not shown) are disposed at equal intervals along the circumferential direction R. Each of the coils 12 is inserted into a corresponding one of the plurality of slots. The coils 12 protrude from both ends of the stator core 11 in the axial direction A, and form the two coil end parts (the welding-side coil end part 21 and the counter-welding-side coil end part 22). Each of the two coil end parts is formed in an annular shape (doughnut shape) as viewed in the axial direction A.

Each of the coils 12 is wound on the stator core 11 to have an inclined portion, which extends in the circumferential direction of the stator 10 while changing in height in the axial direction A. Moreover, in one of the coil end parts, the coils 12 are curved by bending, and in the other one of the coil end parts, tips of the coils 12 are electrically connected to each other by welding. For welding the coils 12, laser welding using a laser beam, or tungsten inert gas (Tig) welding, which is a type of arc welding, is preferably used. In the present embodiment, the coil end part on the welding side is referred to as the welding-side coil end part 21, and the coil end part on the side curved by bending, that is, the coil end part on the side opposite to the welding side is referred to as the counter-welding-side coil end part 22. In addition, of the end portions of the stator core 11 in the axial direction A, an end portion on which the welding-side coil end part 21 is formed is referred to as a welding-side end portion 101, and an end portion on which the counter-welding-side coil end part 22 is formed is referred to as a counter-welding-side end portion 102.

In the welding-side coil end part 21, it is necessary to provide sufficient intervals for welding the coils. Thus, the diameter size of the annular ring of the welding-side coil end part 21 is larger than the diameter size of the annular ring of the counter-welding-side coil end part 22. Therefore, in the height direction, the highest position H12 of the counter-welding-side coil end part 22 is lower than the highest position H11 of the welding-side coil end part 21. In this manner, the coil shapes and the diameter sizes are different between the welding-side coil end part 21 and the counter-welding-side coil end part 22. Here, the diameter size is a size in a radial direction about the central axis of the annular ring of the welding-side coil end part 21. Note that each of the central axis of the annular ring of the welding-side coil end part 21, the central axis of the annular ring of the counter-welding-side coil end part 22, and the central axis of the stator core 11 coincides with the central axis of the stator 10.

The coil 12 is insulated by being subjected to enameled coating, but a welded portion is not subjected to enameled insulation. Such a portion not subjected to enameled insulation is insulated by being coated with insulating material (varnish, resin, or the like) other than enamel. Specifically, in the axial direction A, coils in a range from an end portion 211 of the welding-side coil end part 21 to a boundary position J are an insulated portion 214 insulated with insulating material. However, the illustration of the insulated portion 214 is omitted, and the welding-side coil end part 21 is shown. Here, the boundary position J is a boundary position between the insulated portion 214 insulated with insulating material and a portion not insulated with the insulated portion 214 in the welding-side coil end part 21.

The motor cooling device 2 includes a first cooling medium pipe 31 and a second cooling medium pipe 32. The first cooling medium pipe 31 supplies a cooling medium to the welding-side coil end part 21. The second cooling medium pipe 32 supplies the cooling medium to the counter-welding-side coil end part 22. The first cooling medium pipe 31 and the second cooling medium pipe 32 are two cooling medium pipes branching from a cooling medium supply path. Here, the cooling medium is a liquid cooling medium for cooling the motor, and cools, for example, the welding-side coil end part 21 and the counter-welding-side coil end part 22. As the cooling medium, for example, cooling oil is used.

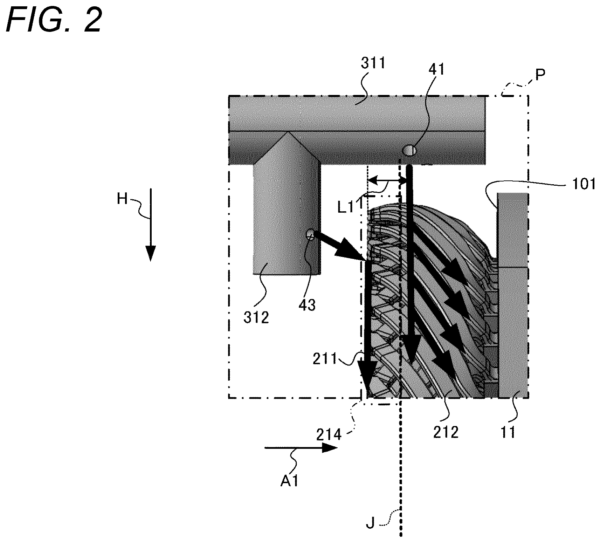

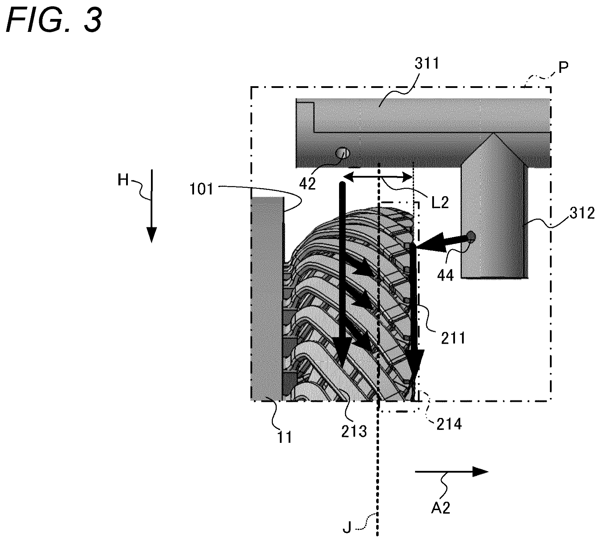

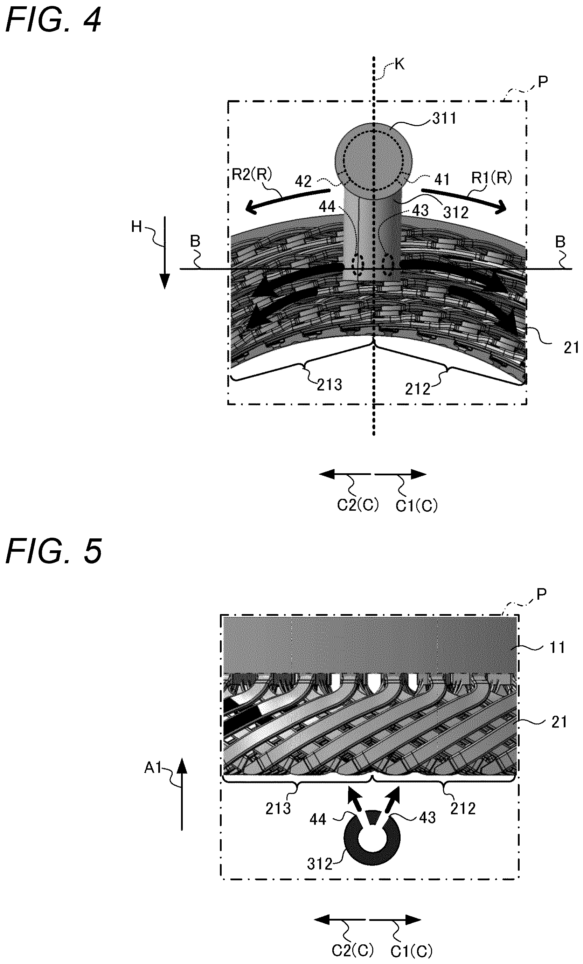

FIG. 2 is an enlarged view of a region P shown in FIG. 1. FIG. 3 is a view of the region P as viewed from behind toward front of the paper surface of FIG. 1. FIG. 4 is a view of the region P shown in FIG. 1, as viewed in the first axial direction A1. FIG. 5 is a cross-sectional view taken along line B-B shown in FIG. 4, and is a view of the region P as viewed from an upper side along the gravity direction H. In the following description, a vertical plane K parallel to the gravity direction H and including the central axis O of the stator 10 is defined as a boundary position, and in the welding-side coil end part 21 shown in FIG. 4, one region divided at the boundary position is referred to as a first welding-side region, and the other divided region is referred to as a second welding-side region. In the present embodiment, the right side and the left side in the paper surface of FIG. 4 are referred to as a first welding-side region 212 and a second welding-side region 213, respectively.

In addition, a lateral direction in the paper surface of FIG. 4, that is, a horizontal direction perpendicular to both the gravity direction H and the axial direction A is referred to as a horizontal direction C. In the horizontal direction C, one direction is referred to as a first horizontal direction, and the other direction is referred to as a second horizontal direction. In the present embodiment, the right direction in the paper surface of FIG. 4 is referred to as a first horizontal direction C1, and the left direction is referred to as a second horizontal direction C2. In the circumferential direction R, one direction is referred to as a first circumferential direction, and the other direction is referred to as a second circumferential direction. In the present embodiment, a clockwise direction when the welding-side coil end part 21 is viewed in the first axial direction A1 is referred to as a first circumferential direction R1, and a counterclockwise direction when the welding-side coil end part 21 is viewed in the first axial direction A1 is referred to as a second circumferential direction R2.

As shown in FIGS. 1 to 4, a first cooling medium supply portion 311, which is a tip portion of the first cooling medium pipe 31, is disposed to overlap the welding-side coil end part 21 along the axial direction A. More specifically, the first cooling medium supply portion 311 is disposed such that a position of an axis passing through the center of an inner diameter of the first cooling medium supply portion 311 coincides with the central axis of the stator core 11 in the height direction and is higher than the highest position of the welding-side coil end part 21. The first cooling medium supply portion 311 is provided with a first welding-side discharge hole 41 and a second welding-side discharge hole 42. As shown in FIG. 2, the position of the first welding-side discharge hole 41 in the axial direction A is a position between the boundary position J and the welding-side end portion 101 of the stator core 11 and close to the boundary position J. As shown in FIG. 3, the position of the second welding-side discharge hole 42 in the axial direction A is a position between the boundary position J and the welding-side end portion 101 of the stator core 11 and close to the boundary position J. However, as compared with the first welding-side discharge hole 41, the position of the second welding-side discharge hole 42 in the axial direction A is close to the welding-side end portion 101 of the stator core 11. In this manner, the positions of the first welding-side discharge hole 41 and the second welding-side discharge hole 42 in the axial direction A are different from each other.

As shown in FIG. 4, the first welding-side discharge hole 41 is provided to discharge the cooling medium along the first circumferential direction R1 of the welding-side coil end part 21. Specifically, the first welding-side discharge hole 41 is formed to face the first welding-side region 212 side, and is formed such that the axis of the first welding-side discharge hole 41 coincides with a radial direction of the cylinder of the first cooling medium pipe 31. Here, the radial direction of the cylinder is a radial direction about the central axis of the cylinder of the first cooling medium pipe 31. Thus, the cooling medium lands on the welding-side coil end part 21 along the first circumferential direction R1, and flows in the gravity direction H along the inclinations of the coils 12 in the welding-side coil end part 21. On the other hand, the second welding-side discharge hole 42 is provided to discharge the cooling medium along the second circumferential direction R2 of the welding-side coil end part 21. Specifically, the second welding-side discharge hole 42 is formed to face the second welding-side region 213, and is formed such that the axis of the second welding-side discharge hole 42 coincides with the radial direction of the cylinder of the first cooling medium pipe 31. Thus, the cooling medium lands on the welding-side coil end part 21 along the second circumferential direction R2, and flows in the gravity direction H along the inclinations of the coils 12 in the welding-side coil end part 21.

As described above, the first welding-side discharge hole 41 is disposed at a position close to the end portion 211 of the welding-side coil end part 21, as compared with the second welding-side discharge hole 42. More specifically, a distance L1 (see FIG. 2) in the axial direction A between the first welding-side discharge hole 41 and the end portion 211 is shorter than a distance L2 (see FIG. 3) in the axial direction A between the second welding-side discharge hole 42 and the end portion 211.

As described above, in the welding-side coil end part 21, each of the tips of the coils 12 extending from the slots is inclined for welding, and the direction of this inclination is different on both sides in the circumferential direction R of the welding-side coil end part 21. As shown in FIG. 2, in the first welding-side region 212 of the welding-side coil end part 21, the coil is wound to be directed toward the gravity direction H while being directed toward the first axial direction A1. On the other hand, the first welding-side discharge hole 41 is disposed at a position substantially identical to the boundary position J, in the axial direction A. Accordingly, the cooling medium having landed on the first welding-side region 212 of the welding-side coil end part 21 flows toward the gravity direction H while being toward the first axial direction A1. Thus, a wide range of the welding-side coil end part 21 can be covered with the cooling medium, and cooling performance can be enhanced

On the other hand, as shown in FIG. 3, in the second welding-side region 213 of the welding-side coil end part 21, the coil 12 is wound to be directed toward the gravity direction H while being directed toward the second axial direction A2. Accordingly, in a case where the second welding-side discharge hole 42 is disposed at a position substantially identical to the boundary position J, the cooling medium is unable to be caused to flow toward the stator core 11 side. Therefore, in the present embodiment, the second welding-side discharge hole 42 is disposed close to the stator core 11 side with respect to the boundary position J, in the axial direction A. As a result, the cooling medium having landed on the second welding-side region 213 of the welding-side coil end part 21 flows toward the gravity direction H while being toward the second axial direction A2. Therefore, a wide range of the welding-side coil end part 21 can be covered with the cooling medium, and cooling performance can be enhanced.

As described above, each of the first welding-side discharge hole 41 and the second welding-side discharge hole 42 is disposed at such a position where the cooling medium lands at a high position in the height direction, in an inclination direction in which the coil is wound. Therefore, a wide range of the welding-side coil end part 21 and a wide range of the counter-welding-side coil end part 22 can be covered with the cooling medium discharged from the first welding-side discharge hole 41 and the second welding-side discharge hole 42, respectively.

Further, the first cooling medium pipe 31 is formed with a third cooling medium supply portion 312 branching from the first cooling medium supply portion 311 and extending toward an inner side in the radial direction (an inner diameter side) of the stator core 11. Here, the radial direction of the stator core 11 is identical to the radial direction of the stator 10, and the inner side in the radial direction is a direction toward the central axis O of the stator 10. The third cooling medium supply portion 312 extends in the gravity direction H at a position facing the end portion 211 of the welding-side coil end part 21.

As shown in FIGS. 2 to 5, the third cooling medium supply portion 312 is provided with a third welding-side discharge hole 43 and a fourth welding-side discharge hole 44. The third welding-side discharge hole 43 and the fourth welding-side discharge hole 44 discharge, to the welding-side coil end part 21 that the third welding-side discharge hole 43 and the fourth welding-side discharge hole 44 face in the axial direction A, the cooling medium, toward the one side and the other side in the circumferential direction of the welding-side coil end part 21, that is, the first welding-side region 212 and the second welding-side region 213. The third welding-side discharge hole 43 is formed to face the first welding-side region 212, and is formed such that the axis of the third welding-side discharge hole 43 coincides with a radial direction of the cylinder of the third cooling medium supply portion 312. Here, the radial direction of the cylinder is a radial direction about the central axis of the cylinder.

**In** this manner, the third welding-side discharge hole 43 is formed such that the axis thereof is angled toward the first horizontal direction C1 with respect to the axial direction A, that is, angled toward the first welding-side region 212 side. Thus, as shown in FIGS. 4 and 5, in the third welding-side discharge hole 43, the cooling medium is discharged in a direction angled toward the first horizontal direction C1 with respect to the first axial direction A1. Further, the cooling medium flows while being angled in the gravity direction H due to gravity. Further, the fourth welding-side discharge hole 44 is formed such the axis thereof is angled toward the second horizontal direction C2 with respect to the first axial direction A1, that is, angled toward the second welding-side region 213 side. Thus, as shown in FIGS. 4 and 5, in the fourth welding-side discharge hole 44, the cooling medium is discharged in a direction angled toward the second horizontal direction C2 with respect the first axial direction A1. Further, the cooling medium flows while being angled in the gravity direction H due to gravity.

On a plane perpendicular to the gravity direction H, an angle formed between the direction of the cooling medium discharged from the third welding-side discharge hole 43 and the direction of the cooling medium discharged from the fourth welding-side discharge hole 44 is preferably less than 90°, and more preferably 20° to 60°. Thus, the cooling medium can be reliably discharged to the welding-side coil end part 21. Therefore, by allowing the cooling medium to flow on axial end portions on both sides in the circumferential direction of the welding-side coil end part 21, cooling performance in the welding-side coil end part 21 can be enhanced.

In a case where the cooling medium is discharged from the third cooling medium supply portion 312 along the first axial direction A1, the cooling medium is repelled at the end portion 211 of the welding-side coil end part 21, and a wide range cannot be covered. In contrast, as described above, instead of discharging the cooling medium from the third cooling medium supply portion 312 along the first axial direction A1, the motor cooling device 2 of the present embodiment discharges the cooling medium while angling the cooling medium toward the horizontal direction with respect to the first axial direction A1. Thus, the cooling medium discharged from each of the third welding-side discharge hole 43 and the fourth welding-side discharge hole 44 lands on the end portion 211 of the welding-side coil end part 21 in a direction of flow along the circumferential direction of the welding-side coil end part 21. Therefore, the cooling medium is hardly repelled at the end portion 211. Further, the cooling medium having landed on the end portion 211 flows in the gravity direction H while being along the direction of the inclined portions of the coils, that is, along the axial direction A and the circumferential direction R, whereby the coils can be covered in a wide range.

In this manner, by the cooling medium discharged from each of the third welding-side discharge hole 43 and the fourth welding-side discharge hole 44, a wide range can be covered with the cooling medium in the end portion 211 of the welding-side coil end part 21. Thus, the cooling effect can be enhanced. Note that each of the third welding-side discharge hole 43 and the fourth welding-side discharge hole 44 is simply required to discharge the cooling medium in a direction angled with respect to the first axial direction A1, and the angled direction is not limited to the horizontal direction. For example, each of the respective directions in which the cooling medium is discharged from the third welding-side discharge hole 43 and the fourth welding-side discharge hole 44 may be a direction angled toward the gravity direction H or a direction angled toward a direction opposite to the gravity direction H. In either case, the cooling medium can be made less likely to be repelled.

In addition, each of the respective positions of the third welding-side discharge hole 43 and the fourth welding-side discharge hole 44 in the gravity direction H (height direction) is preferably a position of between four-tenths and six-tenths of a width in a radial direction of the annular ring of the welding-side coil end part 21. In a case where the third welding-side discharge hole 43 and the fourth welding-side discharge hole 44 are disposed at the highest positions of the welding-side coil end part 21, the cooling medium is discharged above the welding-side coil end part 21 in the horizontal direction C, and the cooling medium cannot be efficiently discharged to the welding-side coil end part 21. In addition, in a case where each of the positions of the third welding-side discharge hole 43 and the fourth welding-side discharge hole 44 is too low, an upper portion of the welding-side coil end part 21 cannot be coated with the cooling medium. Therefore, the third welding-side discharge hole 43 and the fourth welding-side discharge hole 44 are preferably disposed at proper positions not so high as to exceed the welding-side coil end part 21. As a result, the cooling medium can be caused to land at a proper position for the welding-side coil end part 21, a covered range on which the cooling medium flows can be secured in the welding-side coil end part, and cooling performance can be enhanced.

Next, the second cooling medium pipe 32 provided for the counter-welding-side coil end part 22 will be described. As described above, the welding-side coil end part 21 and the counter-welding-side coil end part 22 have different diameter sizes, different heights, different coil inclination directions, and different coil densities. Thus, even if the cooling medium is similarly discharged to the welding-side coil end part 21 and the counter-welding-side coil end part 22, the coils cannot be similarly covered. Therefore, the motor cooling device 2 of the present embodiment discharges the cooling medium to the welding-side coil end part 21 and the counter-welding-side coil end part 22 at positions and in directions in accordance with the positions of the respective coils and directions of inclinations of the respective coils, or the like.

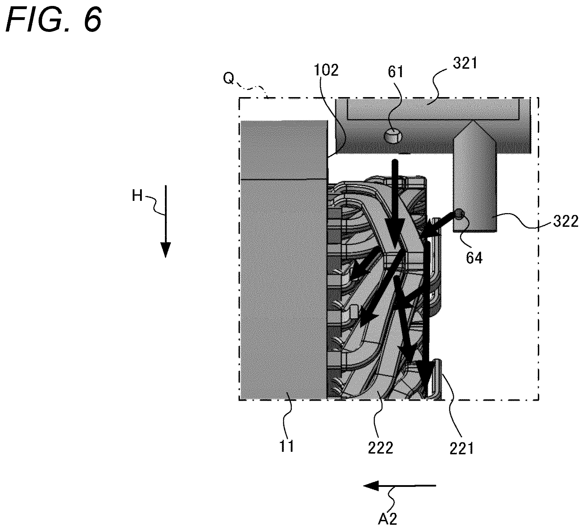

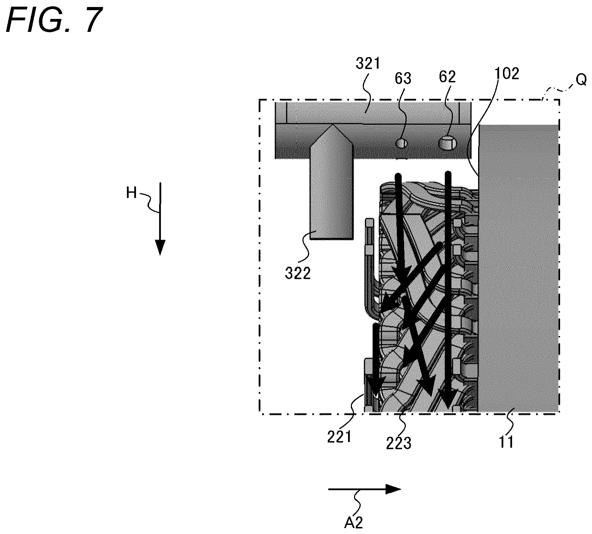

FIG. 6 is an enlarged view of a region Q shown in FIG. 1. FIG. 7 is a view of the region Q as viewed from behind toward front of the paper surface of FIG. 1. In the following description, when the counter-welding-side coil end part 22 is viewed in the second axial direction A2, one and the other obtained by vertically dividing the counter-welding-side coil end part 22 into two halves are referred to as a first counter-welding-side region and a second counter-welding-side region, respectively. In the present embodiment, of the vertically divided two ranges, a region on the left side when the counter-welding-side coil end part 22 is viewed in the second axial direction A2, that is, a region shown in FIG. 6 is referred to as a first counter-welding-side region 222. In addition, a region on the right side when the counter-welding-side coil end part is viewed in the second axial direction A2, that is, a region shown in FIG. 7 is referred to as a second counter-welding-side region 223.

As shown in FIGS. 1, 6, and 7, a second cooling medium supply portion 321, which is a tip portion of the second cooling medium pipe 32, is disposed to overlap the counter-welding-side coil end part 22 along the axial direction A, similarly to the first cooling medium supply portion 311 of the first cooling medium pipe 31. More specifically, the second cooling medium supply portion 321 is disposed such that a position of an axis passing through the center of an inner diameter of the second cooling medium supply portion 321 coincides with the central axis of the stator core 11 in the height direction and is higher than the highest position of the counter-welding-side coil end part 22.

The second cooling medium supply portion 321 is provided with three counter-welding-side discharge holes (a first counter-welding-side discharge hole 61, a second counter-welding-side discharge hole 62, and a third counter-welding-side discharge hole 63). The first counter-welding-side discharge hole 61 is provided to discharge the cooling medium along the first circumferential direction R1. Specifically, the first counter-welding-side discharge hole 61 is formed to face the first counter-welding-side region 222 side, and is formed such that the axis of the first counter-welding-side discharge hole 61 coincides with a radial direction of the cylinder of the second cooling medium pipe 32. Here, the radial direction of the cylinder of the second cooling medium pipe 32 is a radial direction about the central axis of the cylinder. Thus, the cooling medium lands on the counter-welding-side coil end part 22 along the first circumferential direction R1 (see FIG. 4), and flows in the gravity direction H along the inclinations of the coils 12 in the counter-welding-side coil end part 22.

On the other hand, each of the second counter-welding-side discharge hole 62 and the third counter-welding-side discharge hole 63 is provided to discharge the cooling medium along the second circumferential direction R2. Specifically, the second counter-welding-side discharge hole 62 is formed to face the second counter-welding-side region 223, and is formed such that the axis of the second counter-welding-side discharge hole 62 coincides with the radial direction of the cylinder of the second cooling medium pipe 32. Thus, the cooling medium lands on the counter-welding-side coil end part 22 along the second circumferential direction R2 (see FIG. 4), and flows in the gravity direction H along the inclinations of the coils 12 in the counter-welding-side coil end part 22. Similarly to the second counter-welding-side discharge hole 62, the third counter-welding-side discharge hole 63 is also formed to face the second counter-welding-side region 223, and is also formed such that the axis of the third counter-welding-side discharge hole 63 coincides with the radial direction of the cylinder of the second cooling medium pipe 32.

Note that the respective axial positions of the first counter-welding-side discharge hole 61, the second counter-welding-side discharge hole 62, and the third counter-welding-side discharge hole 63 are different from one another. In addition, the respective diameter sizes of the second counter-welding-side discharge hole 62 and the third counter-welding-side discharge hole are different from each other.

Further, similarly to the first cooling medium pipe 31, the second cooling medium pipe 32 is formed with a fourth cooling medium supply portion 322 branching from the second cooling medium supply portion 321 and extending toward the inner side in the radial direction of the stator core 11, that is, in the gravity direction H. As shown in FIG. 6, the fourth cooling medium supply portion 322 is provided with a fourth counter-welding-side discharge hole 64. The fourth counter-welding-side discharge hole 64 discharges, to the counter-welding-side coil end part 22 that the fourth counter-welding-side discharge hole 64 faces in the axial direction A, the cooling medium, toward one side in the circumferential direction, that is, the first counter-welding-side region 222. The fourth counter-welding-side discharge hole 64 is formed to face the first counter-welding-side region 222, and is formed such that the axis of the fourth counter-welding-side discharge hole 64 coincides with a radial direction of the cylinder of the fourth cooling medium supply portion 322. Here, the radial direction of the cylinder of the fourth cooling medium supply portion 322 is a radial direction about the central axis of the cylinder. In this manner, the fourth counter-welding-side discharge hole 64 is formed such that the axis thereof is angled toward the first horizontal direction C1 with respect to the axial direction A, that is, angled toward the first counter-welding-side region 222. Thus, in the fourth counter-welding-side discharge hole 64, the cooling medium is discharged in a direction angled toward the first horizontal direction with respect to the second axial direction A2. Further, the cooling medium flows while being angled in the gravity direction H due to gravity.

As described in the description of the third cooling medium supply portion 312 with respect to the welding-side coil end part 21, in a case where the cooling medium is discharged from the fourth cooling medium supply portion 322 along the second axial direction A2, the cooling medium is repelled at an end portion 221 of the counter-welding-side coil end part 22. In contrast, instead of discharging the cooling medium from the fourth cooling medium supply portion 322 along the second axial direction A2, the motor cooling device 2 according to the present embodiment discharges the cooling medium while angling the cooling medium toward the horizontal direction with respect to the second axial direction A2. Thus, the cooling medium discharged from the fourth counter-welding-side discharge hole 64 lands on the end portion 221 of the counter-welding-side coil end part 22 in a direction of flow along the circumferential direction of the counter-welding-side coil end part 22. Therefore, the cooling medium is hardly repelled in the end portion 221, and a wider range can be covered, in the end portion 221. Note that in the counter-welding-side coil end part 22, a counter-welding-side discharge hole formed to be angled toward the second counter-welding-side region 223 is not formed.

The first counter-welding-side discharge hole 61 and the fourth counter-welding-side discharge hole 64 are provided for the first counter-welding-side region 222, and the second counter-welding-side discharge hole 62 and the third counter-welding-side discharge hole 63 are provided for the second counter-welding-side region 223. The sizes of the holes are adjusted such that an amount of the cooling medium discharged from the first counter-welding-side discharge hole 61 and the fourth counter-welding-side discharge hole 64 is substantially equal to an amount of the cooling medium discharged from the second counter-welding-side discharge hole 62 and the third counter-welding-side discharge hole 63. With this adjustment, the two coil end parts can be equally cooled, and cooling performance can be enhanced.

In this manner, the counter-welding-side discharge holes provided for the first counter-welding-side region 222 and the counter-welding-side discharge holes provided for the second counter-welding-side region 223 are preferably disposed such that an amount of the cooling medium discharged toward the first counter-welding-side region 222 is equal to an amount of the cooling medium discharged toward the second counter-welding-side region 223. Moreover, the specific size, position, and number of holes for that purpose are not limited to those of the embodiment. Note that, likewise, also in the welding-side coil end part 21, the size and number of the holes are preferably adjusted such that an amount of the cooling medium discharged toward the first welding-side region 212 is substantially equal to an amount of the cooling medium discharged toward the second welding-side region 213.

More preferably, in a case where a vertical plane including the central axis of the second cooling medium supply portion 321 and parallel to the gravity direction H is assumed, the counter-welding-side discharge holes are formed to be asymmetric with respect to the vertical plane, in at least one of the number or positions of the counter-welding-side discharge holes. Here, the central axis of the second cooling medium supply portion 321 is a plane included in the vertical plane and parallel to the paper surface of FIG. 6. One side in the circumferential direction (one of the first counter-welding-side region 222 or the second counter-welding-side region 223) and the other side in the circumferential direction (the other one of the first counter-welding-side region 222 or the second counter-welding-side region 223) of the counter-welding-side coil end part 22 have respective different inclination directions of the coils, that is, have asymmetric shapes with respect to the vertical plane. Therefore, the inclination directions of the coils 12 are asymmetric with respect to the vertical plane. In the present embodiment, the counter-welding-side discharge holes are formed to be asymmetric in at least one of the number or positions of the counter-welding-side discharge holes, in accordance with such inclination directions of the coils 12. Thus, a wider range can be covered with the cooling medium, and cooling performance can be enhanced.

Next, a positional relationship between the first cooling medium supply portion 311 of the first cooling medium pipe 31 and the second cooling medium supply portion 321 of the second cooling medium pipe 32 will be described. In the size in the radial direction that is the radial direction about the central axis O, the counter-welding-side coil end part 22 is smaller than the welding-side coil end part 21. That is, the position H12 of the counter-welding-side coil end part 22 in the height direction is higher than the position H11 of the welding-side coil end part 21 in the height direction. Correspondingly, a position H22 of the second cooling medium supply portion 321 of the second cooling medium pipe 32 in the height direction is lower than a position H21 of the first cooling medium supply portion 311 of the first cooling medium pipe 31 in the height direction. Accordingly, the first welding-side discharge hole 41 and the second welding-side discharge hole 42 provided in the first cooling medium supply portion 311 are different in position in the height direction (gravity direction) from the first counter-welding-side discharge hole 61, the second counter-welding-side discharge hole 62, and the third counter-welding-side discharge hole 63 provided in the second cooling medium supply portion 321.

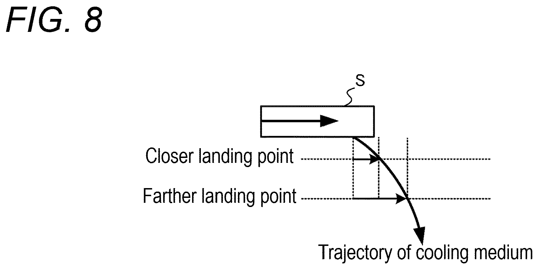

In a case where the first cooling medium supply portion 311 of the first cooling medium pipe 31 and the second cooling medium supply portion 321 of the second cooling medium pipe 32 are provided at the same height, a distance from the first cooling medium supply portion 311 of the first cooling medium pipe 31 to the welding-side coil end part 21 is longer than a distance from the second cooling medium supply portion 321 of the second cooling medium pipe 32 to the counter-welding-side coil end part 22. As shown in FIG. 8, a trajectory of the cooling medium discharged from a cooling medium pipe S draws a parabola due to a direction of the flow of the cooling medium and gravity. In a case where a distance in the gravity direction is long, the landing point greatly changes when the amount of cooling medium changes, and this makes it difficult to cause the cooling medium to land at a target location. Therefore, as described above, the respective heights of the first cooling medium supply portion 311 of the first cooling medium pipe 31 and the second cooling medium supply portion 321 of the second cooling medium pipe 32 are made different from each other.

Accordingly, the first welding-side discharge hole 41 and the second welding-side discharge hole 42 provided in the first cooling medium supply portion 311 are different in position in the height direction (gravity direction) from the first counter-welding-side discharge hole 61, the second counter-welding-side discharge hole 62, and the third counter-welding-side discharge hole 63 provided in the second cooling medium supply portion 321. Thus, it is possible to individually adjust the heights of the cooling medium supply portions 311, 321 such that the height of the first cooling medium supply portion 311 is adjusted in accordance with the height of the welding-side coil end part 21, and the height of the second cooling medium supply portion 321 is adjusted in accordance with the height of the counter-welding-side coil end part 22. Preferably, the distance from the first cooling medium supply portion 311 to the welding-side coil end part 21 is caused to be substantially equal to the distance from the second cooling medium supply portion 321 to the counter-welding-side coil end part 22. Moreover, the distance from each of the first welding-side discharge hole 41 and the second welding-side discharge hole 4 provided in the first cooling medium supply portion 311 to the welding-side coil end part 21 is caused to be substantially equal to the distance from each of the first counter-welding-side discharge hole 61, the second counter-welding-side discharge hole 62, and the third counter-welding-side discharge hole 63 provided in the second cooling medium supply portion 321 to the counter-welding-side coil end part 22. Thus, the cooling medium can be caused to land at predetermined positions in the coil end parts, and cooling performance can be enhanced.

In addition, in a case where the distance from the first cooling medium supply portion 311 to the welding-side coil end part 21 is too long, the cooling medium that does not land on the welding-side coil end part 21 increases. Therefore, the distance from the first cooling medium supply portion 311 to the welding-side coil end part 21 is preferably such a distance that the cooling medium properly lands on the welding-side coil end part 21. Likewise, the distance from the second cooling medium supply portion 321 to the counter-welding-side coil end part 22 is preferably such a distance that the cooling medium properly lands on the counter-welding-side coil end part 22.

As described above, in the motor cooling device 2 of the present embodiment, the first cooling medium pipe 31 that supplies the cooling medium to the welding-side coil end part 21 and the second cooling medium pipe 32 that supplies the cooling medium to the counter-welding-side coil end part 22 are provided separately, and the respective positions of the first cooling medium pipe 31 and the second cooling medium pipe 32 in the gravity direction H are different from each other. Accordingly, flexibility regarding the positions at which the cooling medium pipes 31, 32 can be disposed can be increased. Thus, the cooling medium can be caused to land at respective proper positions for the coil end parts, which are the two coil end parts having different shapes and sizes. Therefore, a range covered with the cooling medium can be secured, and cooling performance can be enhanced. In addition, the first cooling medium pipe 31 is formed with the third cooling medium supply portion 312 extending toward the inner side in the radial direction, and the second cooling medium pipe 32 is formed with the fourth cooling medium supply portion 322 extending toward the inner side in the radial direction. Accordingly, the cooling medium can be discharged to the end portion 211 of the welding-side coil end part 21 from the axial direction A, and the cooling medium can be discharged to the end portion 221 of the counter-welding-side coil end part 22 from the axial direction A. Thus, cooling performance with respect to the coil end parts can be enhanced.

The above embodiment is an example for implementing the present invention, and other various embodiments can be adopted. As a first modification as a kind of those, the first cooling medium pipe 31 and the second cooling medium pipe 32 need not include the third cooling medium supply portion 312 and the fourth cooling medium supply portion 322, respectively. Also in this case, a wide range of the coils can be covered.

As a second modification, at least one of the third welding-side discharge hole 43 or the fourth welding-side discharge hole may be provided in the third cooling medium supply portion 312 of the first cooling medium pipe 31. In addition, the third welding-side discharge hole 43 and the fourth welding-side discharge hole may be bilaterally symmetric or asymmetric regarding the respective lateral positions thereof and the respective directions of the hole axes thereof.

As a third modification, the axial positions of the discharge holes facing downward provided in each of the first cooling medium pipe 31 and the second cooling medium pipe 32 are simply required to be different from each other. Preferably, each of the axial positions of the discharge holes facing downward may be designed in accordance with a winding direction of a corresponding one, of the coils, facing the discharge hole.

As a fourth modification, the first cooling medium pipe 31 and the second cooling medium pipe 32 are simply required to have different heights, and distances from the cooling medium pipes to the coil end parts need not be necessarily equal.

### REFERENCE SIGNS LIST

1: Motor, 2: Motor cooling device, 10: Stator, 11: Stator core, 12: Coil, 21: Welding-side coil end part, 22: Counter-welding-side coil end part, 31: First cooling medium pipe, 32: Second cooling medium pipe, 41: First welding-side discharge hole, 42: Second welding-side discharge hole, 43: Third welding-side discharge hole, 44: Fourth welding-side discharge hole, 61: First counter-welding-side discharge hole, 62: Second counter-welding-side discharge hole, 63: Third counter-welding-side discharge hole, 64: Fourth counter-welding-side discharge hole, 211: End portion, 212: First welding-side region, 213: Second welding-side region, 214: Insulated portion, 221: End portion, 222: First counter-welding-side region, 223: Second counter-welding-side region, 311: First cooling medium supply portion, 312: Third cooling medium supply portion, 321: Second cooling medium supply portion, and 322: Fourth cooling medium supply portion

## Claims

1. A motor cooling structure configured to cool a motor including a stator core on which a plurality of coils are wound, the motor including two coil end parts protruding from both end portions in an axial direction of the stator core, the motor cooling structure comprising:
a first cooling medium pipe configured to supply a cooling medium to one of the two coil end parts; and
a second cooling medium pipe configured to supply a cooling medium to another one of the two coil end parts,
wherein
the first cooling medium pipe includes a first cooling medium supply portion overlapping a corresponding one of the coil end parts along the axial direction,
the second cooling medium pipe includes a second cooling medium supply portion overlapping a corresponding one of the coil end parts along the axial direction,
the first cooling medium supply portion and the second cooling medium supply portion are formed with respective discharge holes each configured to discharge a cooling medium to a corresponding one of the coil end parts, and
respective positions of the first cooling medium supply portion and the second cooling medium supply portion in a gravity direction are different from each other.

2. The motor cooling structure according to claim 1, wherein respective positions of the discharge hole of the first cooling medium supply portion and the discharge hole of the second cooling medium supply portion in a gravity direction are different from each other.

3. The motor cooling structure according to claim 1, wherein
the two coil end parts are a welding-side coil end part in which the plurality of coils are connected to each other by welding, on one end side of the stator core in the axial direction, and a counter-welding-side coil end part in which the plurality of coils are curved, on another end side of the stator core in the axial direction,
a position of the counter-welding-side coil end part in a gravity direction is lower than a position of the welding-side coil end part in a gravity direction,
the first cooling medium pipe is configured to supply a cooling medium to the welding-side coil end part,
the second cooling medium pipe is configured to supply a cooling medium to the counter-welding-side coil end part, and
a position of the second cooling medium supply portion in a gravity direction is lower than a position of the first cooling medium supply portion in a gravity direction.

4. The motor cooling structure according to claim 3, wherein
the first cooling medium pipe is formed with a third cooling medium supply portion further extending toward an inner diameter side of the stator core,
the second cooling medium pipe is formed with a fourth cooling medium supply portion further extending toward an inner diameter side of the stator core,
the third cooling medium supply portion is formed with a welding-side discharge hole configured to discharge a cooling medium to the welding-side coil end part that the welding-side discharge hole faces in the axial direction, and
the fourth cooling medium supply portion is formed with a counter-welding-side discharge hole configured to discharge a cooling medium to the counter-welding-side coil end part that the counter-welding-side discharge hole faces in the axial direction.

5. The motor cooling structure according to claim 3 or 4, wherein
the first cooling medium supply portion has a first welding-side discharge hole configured to discharge a cooling medium to the welding-side coil end part on one side in a circumferential direction of the stator core, and a second welding-side discharge hole configured to discharge a cooling medium to the welding-side coil end part on another side in the circumferential direction, and
respective positions of the first welding-side discharge hole and the second welding-side discharge hole in the axial direction are different from each other.

6. The motor cooling structure according to claim 4, wherein
the third cooling medium supply portion is formed with a third welding-side discharge hole and a fourth welding-side discharge hole each configured to discharge a cooling medium to a corresponding one of one side and another side in a circumferential direction of the welding-side coil end part that the third welding-side discharge hole and the fourth welding-side discharge hole face in the axial direction, and
a direction of a cooling medium discharged from the third welding-side discharge hole and a direction of a cooling medium discharged from the fourth welding-side discharge hole are angled with respect to the axial direction, and an angle formed between a direction of a cooling medium discharged from the third welding-side discharge hole and a direction of a cooling medium discharged from the fourth welding-side discharge hole is less than 90°.

7. The motor cooling structure according to claim 3, wherein
the second cooling medium supply portion is formed with a plurality of counter-welding-side discharge holes configured to discharge a cooling medium to the counter-welding-side coil end part, on one side and another side in a circumferential direction of the stator core, and
at least one of a number or positions of the counter-welding-side discharge holes is asymmetric with respect to a vertical plane including a central axis of the second cooling medium supply portion.

8. The motor cooling structure according to claim 4, wherein a direction of a cooling medium discharged from the counter-welding-side discharge hole formed in the fourth cooling medium supply portion is angled with respect to the axial direction.

9. The motor cooling structure according to claim 4, wherein
a position, in the gravity direction, of the welding-side discharge hole formed in the third cooling medium supply portion is a position of between four-tenths and six-tenths of a width in a radial direction of an annular ring of the welding-side coil end part, and
a position, in the gravity direction, of the counter-welding-side discharge hole formed in the fourth cooling medium supply portion is a position of between four-tenths and six-tenths of a width in a radial direction of an annular ring of the counter-welding-side coil end part.
